# EUROPÄISCHE PATENTANMELDUNG

(11) **EP 1 832 902 A1**
(43) Veröffentlichungstag der Anmeldung: **12.09.2007**
(21) Anmeldenummer: 06004966.5
(22) Anmeldetag: 10.03.2006
(51) Int. Cl.: G02B 6/00

(54) **Flache Leuchtvorrichtung**

(71) Anmelder: Delphi Technologies, Inc., Troy, MI 48007 (US)
(72) Erfinder: Haack, Albrecht, 42369 Wuppertal (DE)
(74) Vertreter: Manitz, Finsterwald & Partner GbR

(57) **Zusammenfassung**

Die Erfindung betrifft eine Leuchtvorrichtung mit wenigstens einer Lichtquelle (10) und einem Lichtleiter (12) für das von der Lichtquelle (10) ausgesandte Licht, wobei der Lichtleiter (12) eine der Lichtquelle (10) zugewandte Lichteintrittsseite (22) und eine an die Lichteintrittsseite (22) angrenzende Lichtaustrittsseite (14) aufweist, wobei der Lichtleiter (12) eine ausgehend von der Lichteintrittsseite (22) und entlang der Lichtaustrittsseite (14) gesehen sich verjüngende Querschnittsfläche aufweist und wobei eine Parallelisierstruktur vorgesehen ist, um das von der Lichtquelle (10) ausgestrahlte und in den Lichtleiter (12) eingetretene Licht (30,36,56) in der Querschnittsflächenebene zu parallelisieren.

## Beschreibung

Die Erfindung betrifft eine Leuchtvorrichtung mit wenigstens einer Lichtquelle und einem Lichtleiter für das von der Lichtquelle ausgesandte Licht.

Derartige Leuchtvorrichtungen sind grundsätzlich bekannt und werden in Kraftfahrzeugen beispielsweise als Bremsleuchten oder als Fahrtrichtungsanzeiger eingesetzt. Als Lichtquellen werden bevorzugt Leuchtdioden (LEDs) verwendet, da diese im Vergleich zu z.B. Glühlampen eine höhere Lebensdauer, geringere Schaltzeiten sowie einen reduzierten Stromverbrauch aufweisen.

Die Abstrahlcharakteristik derartiger Leuchtvorrichtungen wird letztlich durch die Form des Lichtleiters bestimmt. Bekannt sind Leuchtvorrichtungen, die über einen Lichtleiter in Gestalt einer kreisrunden Scheibe verfügen, wobei die eine Seite der Scheibe eine im Wesentlichen plane Lichtaustrittsfläche bildet. Die Lichtquelle ist an der der Lichtaustrittsseite abgewandten Rückseite des Lichtleiters montiert, wodurch die Leuchtvorrichtung eine für manche Anwendungen zu große Bauhöhe aufweist.

Der Erfindung liegt die Aufgabe zugrunde, eine Leuchtvorrichtung zu schaffen, die trotz einer möglichst großen Lichtaustrittsfläche eine besonders kompakte Bauform aufweist.

Zur Lösung der Aufgabe ist eine Leuchtvorrichtung mit den Merkmalen des Anspruchs 1 vorgesehen.

Die erfindungsgemäße Leuchtvorrichtung umfasst wenigstens eine Lichtquelle und einen Lichtleiter für das von der Lichtquelle ausgesandte Licht, wobei der Lichtleiter eine der Lichtquelle zugewandte Lichteintrittsseite und eine an die Lichteintrittsseite angrenzende Lichtaustrittsseite aufweist, wobei der Lichtleiter eine - ausgehend von der Lichteintrittsseite entlang der Lichtaustrittsseite gesehen - sich verjüngende Querschnittsfläche aufweist und wobei eine Parallelisierstruktur vorgesehen ist, um das von der Lichtquelle ausgestrahlte und in den Lichtleiter eingkoppelnde Licht in der Querschnittsflächenebene zu parallelisieren.

Der Erfindung liegt letztlich der allgemeine Gedanke zugrunde, den Lichtleiter nicht scheibenförmig, sondern im Wesentlichen keilförmig auszubilden, das in den Lichtleiter eingekoppelte Licht über eine der Keilflächen austreten zu lassen und die Lichtquelle nicht an der der Lichtaustrittsseite abgewandten Keilseite, sondern vielmehr an der Stirnseite des Lichtleiters anzuordnen, welche an die Lichtaustrittsseite angrenzt. Durch die Montage der Lichtquelle an der Stirnseite des Lichtleiters weist die Leuchtvorrichtung insgesamt eine flachere Gestalt, d.h. also eine - senkrecht zur Lichtaustrittseite gesehen - geringere Bauhöhe auf. Die Leuchtvorrichtung lässt sich dadurch besonders Platz sparend an einer steilen Heckscheibe eines Kraftfahrzeugs anbringen, beispielsweise als hoch gesetzte Bremsleuchte.

Der Lichtleiter kann auch derart gekrümmt sein, dass die Lichtaustrittsseite in der Querschnittsflächenebene gesehen eine, insbesondere konvexe, Krümmung aufweist. Eine Leuchtvorrichtung mit einem solchen Lichtleiter eignet sich z.B. für eine Verwendung als Fahrtrichtungsanzeiger in einem Eckbereich eines Kraftfahrzeugs.

Durch die Parallelisierstruktur wird das in den Lichtleiter einkoppelnde Licht parallelisiert und bevorzugt parallel zur Lichtaustrittsseite ausgerichtet. Dies führt nicht nur zu einem definierten Lichtaustritt aus dem Lichtleiter, sondern bewirkt auch eine Maximierung der Leuchtfläche. So können die parallelisierten Lichtstrahlen den Lichtleiter zumindest annähernd vollständig durchlaufen und auch in einem der Lichteintrittsseite fernen Bereich des Lichtleiters definiert aus diesem auskoppeln.

Vorteilhafte Ausbildungen der Erfindung sind den Unteransprüchen, der Beschreibung und der Zeichnung zu entnehmen.

Gemäß einer Ausführungsform ist die Parallelisierstruktur an der Lichteintrittsseite, mit anderen Worten also an der Stirnseite des Lichtleiters, angeordnet.

Eine solche Parallelisierstruktur kann zwei Parallelisierelemente und ein zwischen diesen angeordnetes Linsenelement umfassen. Durch das Linsenelement lassen sich die zentralen, d.h. die der optischen Achse der Lichtquelle nahen, Lichtstrahlen parallelisieren, während die Parallelisierelemente eine Parallelisierung auch der achsfernen Lichtstrahlen bzw. Randstrahlen und solcher Lichtstrahlen ermöglichen, die unter einem Winkel von der Lichtquelle abgestrahlt werden, welcher eine Einkopplung in das Linsenelement unmöglich macht.

Vorteilhafterweisen erstrecken sich das Linsenelement und die Parallelisierelemente in einer zur Querschnittsflächenebene senkrechten Richtung, wobei die Querschnittsflächen des Linsenelements bzw. der Parallelisierelemente jeweils gleich bleiben. Bei dem Linsenelement und den Parallelisierelementen handelt es sich gewissermaßen also um zylindrische Bauteile.

Das Linsenelement weist bevorzugt eine halbkreisförmige oder halbelliptische Querschnittsfläche auf. Die Querschnittsflächen der Parallelisierelemente können dreieckig sein oder eine andere Form aufweisen, die geeignet ist, das in den Lichtleiter eintretende Licht zu parallelisieren. Beispielsweise kann ein Parallelisierelement wenigstens eine gekrümmte, z.B. parabolische, und/oder eine facettenartig ausgebildete, d.h. aus mehren zueinander abgewinkelten Flächenabschnitten zusammengesetzte, Freiformfläche aufweisen.

Gemäß einer weiteren Ausführungsform ist die Parallelisierstruktur an der Lichtaustrittsseite angeordnet. Beispielsweise kann diese Parallelisierstruktur durch einen, insbesondere an die Lichteintrittsseite angrenzenden, parabolischen Flächenabschnitt der Lichtaustrittsseite gebildet sein. Der parabolische Flächenabschnitt bildet eine Reflexionsfläche für das in den Lichtleiter eingekoppelte Licht und somit einen Bereich der Lichtaustrittsseite, in dem kein Lichtaustritt erfolgt. Der parabolische Flächenabschnitt geht vorzugsweise "nahtlos" in die Leuchtfläche des Lichtleiters über. Er bildet mit anderen Worten also einen Übergangsbereich zwischen der Lichteintrittsseite und dem Lichtaustrittsbereich des Lichtleiters.

Eine derartige parabolische Parallelisierstruktur eignet sich besonders gut für einen zumindest im Bereich der Lichteintrittsseite gekrümmten Lichtleiter, welcher es aufgrund seiner Krümmung auch bei einer stirnseitigen Montage der Lichtquelle ermöglicht, die Lichtquelle z.B. in einem hinter der Lichtaustrittsseite gelegenen Bereich zu montieren.

Zur noch besseren Parallelisierung des in den Lichtleiter einkoppelnden Lichts in der Querschnittsflächenebene ist es grundsätzlich auch möglich, eine parabolische Parallelisierstruktur mit einer Parallelisierstruktur zu kombinieren, die ein Linsenelement und Parallelisierelemente aufweist.

Gemäß einer weiteren Ausführungsform weist der Lichtleiter an seiner der Lichtaustrittsseite abgewandten Rückseite eine Auskoppelstruktur für das parallelisierte Licht auf. Beispielsweise kann die Auskoppelstruktur eine Vielzahl von stufenartig angeordneten Reflexionsflächen umfassen. Die Auskoppelstruktur sorgt dafür, dass das parallelisierte Licht so umgelenkt wird, dass es aus dem Lichtleiter austreten kann. Durch eine entsprechende Ausbildung der Auskoppelstruktur ist es möglich, eine gewünschte, z.B. fokussierende oder streuende, Abstrahlcharakteristik der Leuchtvorrichtung einzustellen. Die Reflexionsflächen können je nach Anwendung plan oder gekrümmt sein.

Weist der Lichtleiter einen parabolischen Flächenabschnitt zur Parallelisierung des eingekoppelten Lichts auf, so kann die Lichteintrittsseite, d.h. also die Stirnseite des Lichtleiters, grundsätzlich plan ausgebildet sein. In diesem Fall erfolgt eine Parallelisierung des eingekoppelten Lichts ausschließlich in der Querschnittsflächenebene. Eine solche Ausbildung des Lichtleiters kommt beispielsweise in Frage, wenn entlang der Lichteintrittsseite mehrere Lichtquellen derart dicht nebeneinander angeordnet sind, so dass über eine gewünschte Breite des Lichtleiters eine gleichmäßige Lichteinkopplung bzw. -auskopplung erreicht wird.

Alternativ ist es auch möglich, zusätzlich zu der Parallelisierstruktur an der Lichteintrittsseite eine Umlenkstruktur vorzusehen, durch die das von der Lichtquelle ausgestrahlte Licht in einer zur Querschnittsflächenebene senkrechten Ebene aufweitbar und parallelisierbar ist. Auf diese Weise wird nicht nur ein sich über die zumindest annähernd gesamte Dicke des Lichtleiters, sondern auch ein sich über eine gewisse Breite des Lichtleiters erstreckender paralleler Lichtverlauf erreicht. Dies führt zu einem gleichmäßigen Lichtaustritt im Wesentlichen über die gesamte Länge und Breite der Leuchtfläche des Lichtleiters. Die Ausbildung einer derartigen Umlenkstruktur eignet sich daher besonders für solche Leuchtvorrichtungen, die eine geringere Anzahl von Lichtquellen umfasst, welche mit größeren Abständen zueinander entlang der Lichteintrittsseite des Lichtleiters angeordnet sind.

Vorzugsweise umfasst die Umlenkstruktur drei in dem Lichtleiter ausgebildeten Inzisuren, die innere Reflexionsflächen definieren, und an der Lichteintrittsseite des Lichtleiters, insbesondere stufenartig angeordnete, äußere Reflexionsflächen zur Umlenkung des Lichts, durch die zuvor bereits seitlich umgelenktes Licht in einer Hauptabstrahlrichtung der Lichtquelle umlenkbar ist.

Eine in der Hauptabstrahlrichtung der Lichtquelle angeordnete erste Inzisur kann vordere Reflexionsflächen aufweisen, durch die im Wesentlichen entlang der Hauptabstrahlrichtung der Lichtquelle ausgesandtes Licht seitlich umlenkbar ist. Ferner kann eine jeweils außerhalb der Hauptabstrahlrichtung der Lichtquelle angeordnete zweite und dritte Inzisur jeweils eine vordere und/oder eine hintere innere Reflexionsfläche aufweisen, wobei durch die vorderen inneren Reflexionsflächen Licht, dessen Strahlrichtung um einen von Null verschiedenen Winkel gegenüber der Hauptabstrahlrichtung der Lichtquelle geneigt ist, seitlich und/oder durch die hinteren inneren Reflexionsflächen zuvor bereits seitlich umgelenktes Licht in die Hauptabstrahlrichtung der Lichtquelle umlenkbar ist.

Alternativ kann die Umlenkstruktur auch ein zwischen zwei Parallelisierelementen angeordnetes Linsenelement umfassen, ähnlich der voranstehend beschriebenen Art, wobei sich die Parallelisierelemente und das Linsenelement in diesem Fall bevorzugt parallel zu der Querschnittsflächenebene erstrecken.

Nachfolgend wird die Erfindung rein beispielhaft anhand vorteilhafter Ausführungsformen unter Bezugnahme auf die Zeichnung beschrieben.

Es zeigen:
- Fig. 1: eine perspektivische Ansicht einer ersten Ausführungsform einer erfindungsgemäßen Leuchtvorrichtung;
- Fig. 2: eine Querschnittsansicht der Leuchtvorrichtung von Fig. 1;
- Fig. 3: eine Querschnittsansicht einer Umlenkstruktur der Leuchtvorrichtung von Fig. 1;
- Fig. 4: perspektivische Ansichten einer zweiten Ausführungsform einer erfindungsgemäßen Leuchtvorrichtung; und
- Fig. 5: eine Teilquerschnittsansicht der Leuchtvorrichtung von Fig. 4.

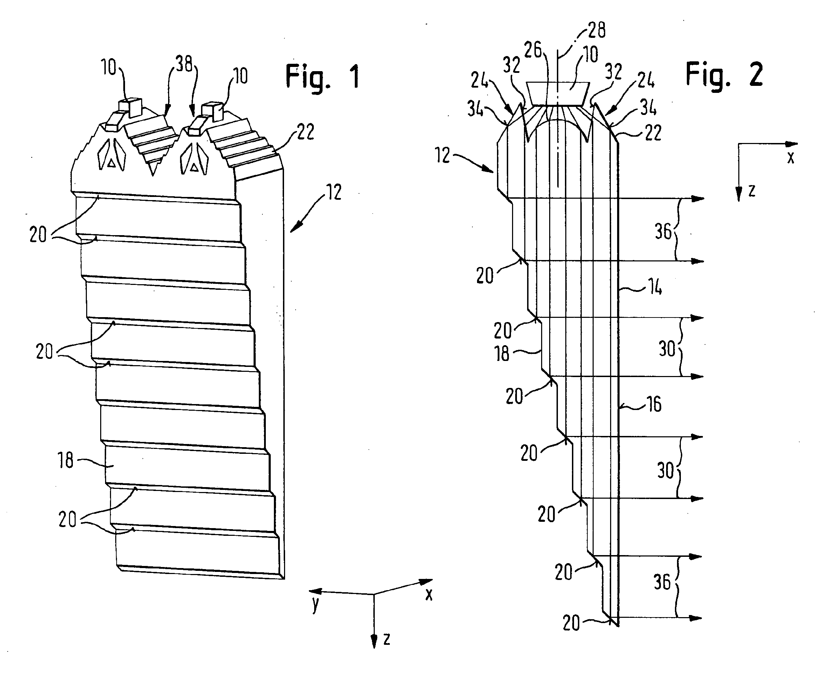

In Fig. 1 ist eine erste Ausführungsform einer erfindungsgemäßen Leuchtvorrichtung dargestellt. Die Leuchtvorrichtung umfasst zwei Lichtquellen, im vorliegenden Ausführungsbeispiel Leuchtdioden 10, und einen Lichtleiter 12, in den das von den Leuchtdioden 10 ausgestrahlte Licht einkoppelbar ist.

Der Lichtleiter 12 ist in an sich bekannter Weise aus einem für das von den Leuchtdioden 10 emittierte Licht durchlässigen Material, z.B. einem Kunststoffmaterial, gebildet. Zur Erzielung eines gewünschten optischen Eindrucks kann das Material des Lichtleiters 12 eingefärbt sein.

Der Lichtleiter 12 weist eine keilförmige Grundform auf, wobei die eine Keilseite 14 im Wesentlichen plan ausgebildet ist. Die Keilseite 14, die nachfolgend auch als Vorderseite oder Lichtaustrittsseite des Lichtleiters 12 bezeichnet wird, umfasst eine Leuchtfläche 16.

An der der Lichtaustrittsseite 14 abgewandten Keilseite 18 des Lichtleiters 12, d.h. also an der Rückseite, ist eine Auskoppelstruktur vorgesehen, die durch eine Vielzahl von stufenartig angeordneten Reflexionsflächen 20 gebildet ist.

In Fig. 1 ist die Leuchtvorrichtung in Beziehung zu einem kartesischen Koordinatensystem gesetzt, welches die weitere Beschreibung der Leuchtvorrichtung erleichtern soll. Das Koordinatensystem ist derart orientiert, dass die x-Achse in Richtung der Dicke, die y-Achse in Richtung der Breite und die z-Achse in Richtung der Länge des keilförmigen Lichtleiters 12 weist. So ist die Leuchtfläche 16 parallel zur yz-Ebene orientiert, während die Keilform des Lichtleiters 12 einem zur xz-Ebene parallelen Schnitt zu entnehmen ist.

Die Leuchtdioden 10 sind an einer Stirnseite 22 des Lichtleiters 12 angeordnet, welche die Keilvorderseite 14 und die Keilhinterseite 18 miteinander verbindet und gewissermaßen die Keilbasis bildet.

Wie Fig. 2 zeigt, sind die Leuchtdioden 10 im xz-Schnitt gesehen etwa mittig bezüglich der Stirnseite 22 positioniert.

Um das von den Leuchtdioden 10 ausgestrahlte und in den Lichtleiter 12 einkoppelnde Licht in der xz-Ebene zu parallelisieren, ist jeder Leuchtdiode 10 eine an der Stirnseite 22 des Lichtleiters 12 ausgebildete Parallelisierstruktur zugeordnet.

Wie Fig. 2 zu entnehmen ist, umfasst jede Parallelisierstruktur zwei zueinander beabstandete, im vorliegenden Ausführungsbeispiel prismenartig ausgebildete Parallelisierelemente 24 sowie ein zwischen den Parallelisierelementen 24 angeordnetes Linsenelement 26. Das Linsenelement 26 weist im xz-Schnitt eine etwa halbkreisförmige oder halbelliptische Querschnittsfläche auf, wohingegen die Parallelisierelemente 24 jeweils eine dreieckige Querschnittsfläche aufweisen. Sowohl das Linsenelement 26 als auch die Parallelisierelemente 24 erstrecken sich in y-Richtung, wobei die jeweiligen Querschnittsflächen gleich bleiben. Bei dem Linsenelement 26 handelt es sich gewissermaßen also um eine Zylinderlinse.

Die Krümmung der zur Leuchtdiode 10 weisenden Oberfläche des Linsenelements 26 ist derart an die Lage der Leuchtdiode 10 angepasst, dass zumindest die der optischen Achse 28 des Linsenelements 26 nahen Lichtstrahlen 30 bzw. diejenigen Lichtstrahlen 30, die mit der optischen Achse 28 einen genügend kleinen Winkel bilden, von dem Linsenelement 26 eingefangen und zumindest annähernd in z-Richtung ausgerichtet, d.h. also parallelisiert werden. Entsprechend sind die inneren und äußeren Flanken 32, 34 der Parallelisierelemente 24 jeweils so geneigt, dass die nicht durch das Linsenelement 26 eingefangenen Lichtstrahlen 36 in die Parallelisierelemente 24 einkoppeln können und von diesen ebenfalls zumindest annähernd in z-Richtung umgelenkt, d.h. also parallelisiert werden.

Zusätzlich zur Parallelisierung des von der Leuchtdiode ausgestrahlten Lichts 30, 36 bewirken die Parallelisierelemente 24 und das Linsenelement 26 außerdem eine Aufweitung des von der Leuchtdiode 10 ausgestrahlten Lichts derart, dass sich im Bereich der Stirnseite 22 - im xz-Schnitt gesehen - eine Strahlbreite ergibt, die zumindest annähernd der Dicke des Lichtleiters 12, d.h. seiner Ausdehnung in x-Richtung gesehen, entspricht.

Das durch das Linsenelement 26 und die Parallelisierelemente 24 parallelisierte und aufgeweitete Licht 30, 36 durchläuft den Lichtleiter 12 zumindest annähernd parallel zur Keilvorderseite 14 und trifft somit über im Wesentlichen die gesamte Länge des Lichtleiters 12 unter einem exakten Winkel auf die rückseitigen Reflexionsflächen 20, durch welche es definiert aus dem Lichtleiter 12 ausgekoppelt wird.

Im vorliegenden Ausführungsbeispiel sind die Reflexionsflächen 20 so ausgebildet, dass die Lichtstrahlen 30, 36 im Wesentlichen rechtwinklig zur Keilvorderseite 14 aus dem Lichtleiter 12 austreten. Die gezeigte Leuchtvorrichtung strahlt mit anderen Worten also im Wesentlichen paralleles Licht ab.

Durch eine entsprechende Ausbildung, z.B. Krümmung, der Reflexionsflächen 20 ist es jedoch auch möglich, eine andere Abstrahlcharakteristik der Leuchtvorrichtung einzustellen, beispielsweise eine fokussierende oder streuende Abstrahlcharakteristik.

Jeder Leuchtdiode 10 ist ferner eine Umlenkstruktur 38 des Lichtleiters 12 zugeordnet, durch die das von der Leuchtdiode 10 ausgestrahlte Licht 30, 36 auch in der yz-Ebene aufweitbar und parallelisierbar ist. Die Umlenkstrukturen 38 erlauben es, die Leuchtdioden 10 in y-Richtung mit einem gewissen Abstand zueinander entlang der Stirnseite 22 des Lichtleiters 12 anzuordnen und trotzdem eine zumindest annähernd gleichmäßige Lichtverteilung in y-Richtung, d.h. also über die Breite des Lichtleiters 12 gesehen, zu erreichen.

Grundsätzlich kann auf die Umlenkstrukturen 38 auch verzichtet werden. Zur Erzielung einer im Wesentlichen gleichmäßigen Lichtverteilung über die Breite des Lichtleiters 12 gesehen müssen die Leuchtdioden 10 in diesem Fall jedoch mit einem geringeren Abstand zueinander entlang der Stirnseite 22 angeordnet werden, wodurch im Vergleich zu einer Lichtleitervariante mit Umlenkstrukturen 38 bei gleicher Breite des Lichtleiters 12 eine größere Anzahl von Leuchtdioden 10 erforderlich wäre.

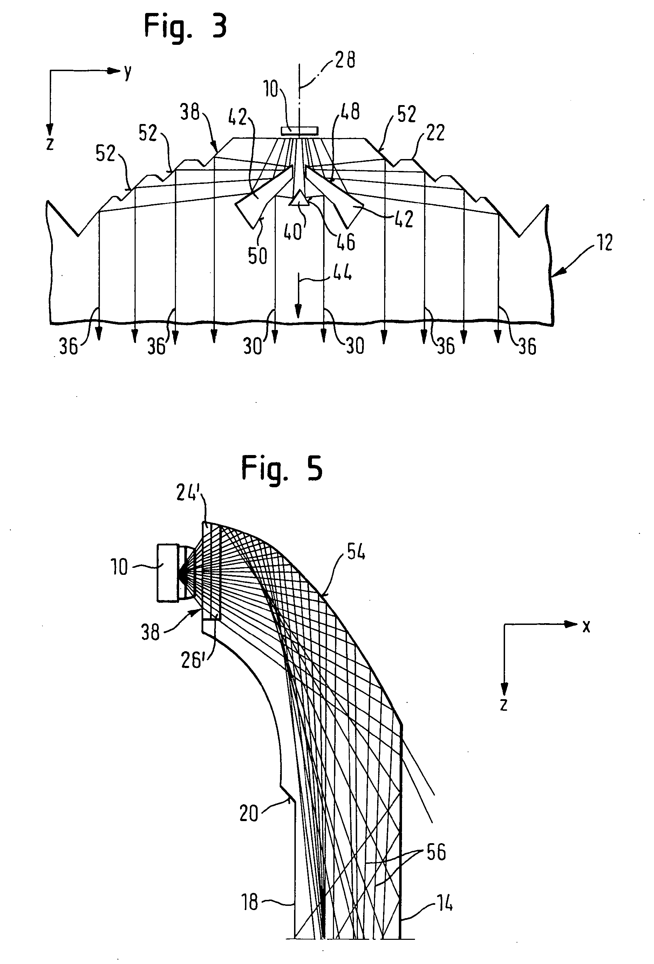

Wie Fig. 3 zeigt, umfasst jede Umlenkstruktur 38 drei Inzisuren 40, 42, die spiegelsymmetrisch bezüglich einer xz-Ebene angeordnet sind, welche sich durch die Mitte der zugeordneten Leuchtdiode 10 erstreckt und nachfolgend als Mittenebene bezeichnet wird. Die Inzisuren 40, 42 erstrecken sich vollständig durch den Lichtleiter 12 hindurch.

Die durch die Inzisuren 40, 42 gebildeten Grenzflächen des Lichtleiters 12 bilden innere Reflexionsflächen aus 46-50, an denen durch die Leuchtdiode 10 in den Lichtleiter 12 eingekoppeltes Licht umgelenkt werden kann.

Eine mittlere Inzisur 40 ist in einer Hauptabstrahlrichtung 44 der Leuchtdiode 10 angeordnet. Die Hauptabstrahlrichtung 44 fällt mit der optischen Achse 28 der Leuchtdiode 10 zusammen und liegt in der Mittenebene. Die mittlere Inzisur 40 ist im yz-Schnitt gesehen im Wesentlichen dreieckig ausgebildet und weist zwei vordere innere Reflexionsflächen 46 auf.

Die anderen beiden Inzisuren 42 sind auf gegenüberliegenden Seiten der Mittenebene und zueinander beabstandet angeordnet, um die Beaufschlagung der mittleren Inzisur 40 mit im Wesentlichen entlang der Hauptabstrahlrichtung 44 der Leuchtdiode 10 ausgesandten Lichts 30 zu ermöglichen. Die äußeren Inzisuren 42 weisen jeweils eine vordere innere Reflexionsfläche 48 und eine hintere innere Reflexionsfläche 50 auf.

Jede Umlenkstruktur 38 weist außerdem äußere Reflexionsflächen 52 auf, die zu beiden Seiten der Mittenebene symmetrisch und von der Leuchtdiode 10 ausgehend absteigend an der Stirnseite 22 des Lichtleiters 12 ausgebildet sind.

Die Umlenkstruktur 38 wirkt folgendermaßen: Das von der Leuchtdiode 10 im Wesentlichen entlang der Hauptabstrahlrichtung 44 ausgesandte Licht 30 tritt in den Lichtleiter 12 ein und wird durch die vorderen inneren Reflexionsflächen 46 der mittleren Inzisur 40 seitlich umgelenkt. Das derart seitlich umgelenkte Licht 30 trifft anschließend auf die hinteren inneren Reflexionsflächen 50 der äußeren Inzisuren 42 und wird durch diese ein weiteres Mal umgelenkt, und zwar derart, dass es nun wieder parallel zur Hauptabstrahlrichtung 44 verläuft.

Außerhalb der Hauptabstrahlrichtung 44 ausgesandtes Licht wird durch die vorderen inneren Reflexionsflächen 48 der äußeren Inzisuren 42 ebenfalls seitlich abgelenkt, um anschließend auf die äußeren Reflexionsflächen 52 des Lichtleiters 12 zu treffen, durch die es wieder parallel zur Hauptabstrahlrichtung 44 umgelenkt wird.

Die voranstehend beschriebene zweifache Umlenkung von sowohl der optischen Achse 28 der Leuchtdiode 10 nahen Lichtstrahlen 30, als auch von achsfernen Lichtstrahlen 36 führt zu einer Aufweitung und Parallelisierung des von der Leuchtdiode 10 ausgestrahlten Lichts in der yz-Ebene.

Vorzugsweise ist die Geometrie der Umlenkstrukturen 38 so gewählt, dass die in der yz-Ebene aufgeweiteten und parallelisierten Lichtbündel benachbarter Leuchtdioden 10 zumindest annähernd aneinander grenzen oder sogar überlappen.

Die in Fig. 1 gezeigte Leuchtvorrichtung weist lediglich zwei Leuchtdioden auf. Es versteht sich jedoch von selbst, dass sich die Ausdehnung der Leuchtvorrichtung in y-Richtung nahezu beliebig erweitern lässt. Hierzu braucht lediglich der Lichtleiter 12 ausreichend breit ausgebildet und mit einer entsprechenden Anzahl von Leuchtdioden 10 versehen zu werden.

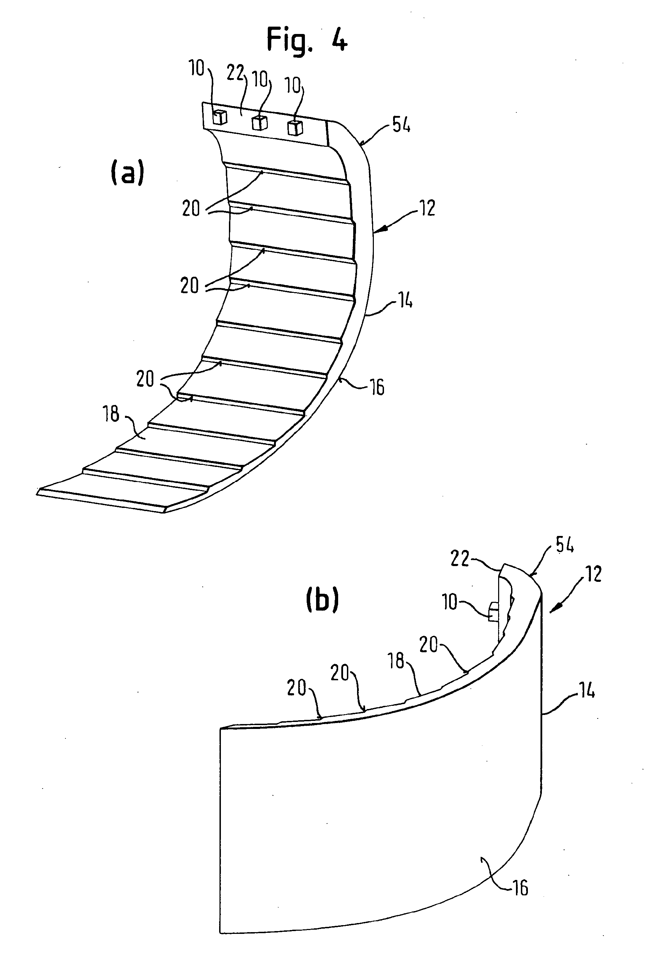

In Fig. 4 und 5 ist eine zweite Ausführungsform einer erfindungsgemäßen Leuchtvorrichtung dargestellt. Bauelemente, die in Bauweise und/oder Funktion in Verbindung mit der ersten Ausführungsform beschriebenen Bauelementen entsprechen, werden mit den bereits eingeführten Bezugszeichen bezeichnet. Auch die Orientierung des eingeführten Koordinatensystems wird beibehalten.

Die zweite Ausführungsform unterscheidet sich von der voranstehend beschriebenen ersten Ausführungsform darin, dass der Lichtleiter 12 die Grundform eines gekrümmten Keils aufweist. Mit anderen Worten verjüngt sich auch bei dieser Ausführungsform die Querschnittsfläche des Lichtleiters 12 in der xz-Ebene ausgehend von seiner Stirnseite 22. Im Unterschied zur ersten Ausführungsform verläuft die Lichtaustrittsseite 14 des Lichtleiters 12 bei der zweiten Ausführungsform jedoch nicht parallel zur yz-Ebene, sondern sie ist konvex gekrümmt.

Die Krümmung des Lichtleiters 12 ist im Bereich der Stirnseite 22 so stark, dass die Stirnseite 22 zumindest annähernd in die gleiche Richtung wie ein benachbarter Abschnitt der Rückseite 18 des Lichtleiters 12 weist, gewissermaßen also nach "hinten".

An der der Lichtaustrittsseite 14 abgewandten Rückseite 18 des Lichtleiters 12 ist eine durch eine Vielzahl von stufenartig angeordneten Reflexionsflächen 20 gebildete Auskoppelstruktur vorgesehen, deren Geometrie so gewählt und an die Krümmung des Lichtleiters 12 angepasst ist, dass - wie bereits im Zusammenhang mit der ersten Ausführungsform erwähnt - eine gewünschte Abstrahlcharakteristik der Leuchtvorrichtung erreicht wird.

Um einen möglichst großflächigen Lichtaustritt an der Lichtaustrittsseite 14 des Lichtleiters 12 und eine gewünschte Abstrahlcharakteristik zu erzielen, ist es auch bei der zweiten Ausführungsform wichtig, das durch die Leuchtdioden 10 ausgestrahlte und in den Lichtleiter 12 eingekoppelte Licht möglichst parallelisiert durch den Lichtleiter 12 zu leiten.

Zur Parallelisierung des von den Leuchtdioden 10 ausgestrahlten Lichts in der Querschnittsflächenebene, d.h. der xz-Ebene, ist ein an die Stirnseite 22 angrenzender Flächenabschnitt 54 der Vorderseite 14 des Lichtleiters 12 parabolisch gekrümmt (Fig. 5). Die Krümmung des parabolischen Flächenabschnitts 54 ist dabei so gewählt, dass die von der Leuchtdiode 10 ausgestrahlten und in den Lichtleiter 12 eingekoppelten Lichtstrahlen an dem Flächenabschnitt 54 einmal reflektiert und dabei parallel zueinander ausgerichtet werden. Der parabolische Flächenabschnitt 54 bildet als Reflexionsfläche somit einen Bereich der Lichtaustrittsseite 14, in welchem im Wesentlichen kein Licht aus dem Lichtleiter 12 auskoppelt.

Durch Mehrfachreflexion an der Vorderseite 14 bzw. Rückseite 18 des Lichtleiters 12 vermag das durch den parabolischen Flächenabschnitt 54 parallelisierte Licht 56 entlang des gesamten Lichtleiters 12 zu verlaufen, wobei jeweils ein Teil des Lichts 56 unter einem definierten Winkel auf eine Reflexionsfläche 20 trifft und durch diese entsprechend der gewünschten Abstrahlcharakteristik aus dem Lichtleiter 12 ausgekoppelt wird.

Grundsätzlich reicht der parabolische Flächenabschnitt 54 zur Parallelisierung des von den Leuchtdioden 10 ausgestrahlten Lichts in der xz-Ebene aus. Zur Parallelisierung des Lichts in der xz-Ebene kann zusätzlich aber auch eine aus Linsen- und Parallelisierelementen 26, 24 gebildete Parallelisierstruktur vorgesehen werden, wie sie im Zusammenhang mit der ersten Ausführungsform beschrieben wurde. In einem solchen Fall würde die Parallelisierung des Lichts in der xz-Ebene durch eine Kombination von Parabolfläche und Linsen- und Parallelisierelementanordnung erreicht.

Um eine Aufweitung und Parallelisierung des von der Leuchtdiode 10 ausgestrahlten Lichts nicht nur in der xz-Ebene, sondern zusätzlich auch senkrecht dazu, nämlich bei Eintritt in den Lichtleiter 12 in der xy-Ebene (Fig. 5), zu erreichen, ist der Lichtleiter 12 des in Fig. 4 und 5 dargestellten Ausführungsbeispiels an seiner Stirnseite 22 mit einer Umlenkstruktur 38 versehen, die zwei Parallelisierelemente 24' und ein zwischen diesen angeordnetes Linsenelement 26' umfasst. Im Unterschied zu dem Linsenelement 26 und den Parallelisierelementen 24 der in Fig. 2 gezeigten Parallelisierstruktur sind das Linsenelement 26' und die Parallelisierelemente 24' der Umlenkstruktur 38 jedoch nicht in y-Richtung, sondern in z-Richtung, d.h. also parallel zu Querschnittsflächenebene, orientiert.

Alternativ könnte die Aufweitung und Parallelisierung des Lichts in der xy-Ebene auch durch eine Umlenkstruktur 38 erzielt werden, wie sie im Zusammenhang mit Fig. 3 beschrieben wurde.

Wie bereits erwähnt, erlaubt es die Aufweitung und Parallelisierung des in den Lichtleiter 12 eingekoppelten Lichts in der xy-Ebene die entlang der Stirnseite 22 verteilt angeordneten Leuchtdioden mit einem größeren Abstand zueinander anzuordnen und trotzdem eine gleichmäßige Lichtabstrahlung über die Breite des Lichtleiters 12 zu gewährleisten.

Auch bei der zweiten Ausführungsform ist es grundsätzlich jedoch möglich, auf eine derartige Lichtaufweitung - und Parallelisierung in der xy-Ebene zu verzichten. Um trotzdem eine gleichmäßige Lichtabstrahlung über die Breite des Lichtleiters 12 zu erreichen, müssen die Leuchtdioden 10 dann allerdings mit einem geringeren Abstand zueinander angeordnet werden, so dass bei einer gleich bleibenden Breite des Lichtleiters 12 eine größere Anzahl von Leuchtdioden 12 vorgesehen werden muss.

### Bezugszeichenliste

- 10: Leuchtdiode
- 12: Lichtleiter
- 14: Keilvorderseite
- 16: Leuchtfläche
- 18: Keilrückseite
- 20: Reflexionsfläche
- 22: Stirnseite
- 24: Parallelisierelement
- 26: Linsenelement
- 28: optische Achse
- 30: Lichtstrahl
- 32: Innenflanke
- 34: Außenflanke
- 36: Lichtstrahl
- 38: Umlenkstruktur
- 40: Inzisur
- 42: Inzisur
- 44: Hauptabstrahlrichtung
- 46: Reflexionsfläche
- 48: Reflexionsfläche
- 50: Reflexionsfläche
- 52: Reflexionsfläche
- 54: Flächenabschnitt
- 56: Lichtstrahl

## Patentansprüche

1. Leuchtvorrichtung mit wenigstens einer Lichtquelle (10) und einem Lichtleiter (12) für das von der Lichtquelle (10) ausgesandte Licht (30, 36, 56),
wobei der Lichtleiter (12) eine der Lichtquelle (10) zugewandte Lichteintrittsseite (22) und eine an die Lichteintrittsseite (22) angrenzende Lichtaustrittsseite (14) aufweist,
wobei der Lichtleiter (12) eine - ausgehend von der Lichteintrittsseite (22) entlang der Lichtaustrittsseite (14) gesehen - sich verjüngende Querschnittsfläche aufweist und
wobei eine Parallelisierstruktur vorgesehen ist, um das von der Lichtquelle (10) ausgestrahlte und in den Lichtleiter (12) eingetretene Licht (30, 36, 56) in der Querschnittsflächenebene zu parallelisieren.

2. Leuchtvorrichtung nach Anspruch 1,
**dadurch gekennzeichnet, dass**
die Parallelisierstruktur an der Lichteintrittsseite (22) angeordnet ist.

3. Leuchtvorrichtung nach Anspruch 1 oder 2,
**dadurch gekennzeichnet, dass**
die Parallelisierstruktur zwei Parallelisierelemente (24) und ein zwischen diesen angeordnetes Linsenelement (26) umfasst.

4. Leuchtvorrichtung nach Anspruch 3,
**dadurch gekennzeichnet, dass**
sich das Linsenelement (26) und die Parallelisierelemente (24) in einer zur Querschnittsflächenebene senkrechten Richtung erstrecken, wobei die Querschnittsflächen des Linsenelements (26) bzw. der Parallelisierelemente (24) jeweils gleich bleiben.

5. Leuchtvorrichtung nach einem der vorherigen Ansprüche,
**dadurch gekennzeichnet, dass**
die oder eine weitere Parallelisierstruktur an der Lichtaustrittsseite (14) angeordnet ist.

6. Leuchtvorrichtung nach Anspruch 5,
**dadurch gekennzeichnet, dass**
die Parallelisierstruktur durch einen, insbesondere an die Lichteintrittsseite (22) angrenzenden, parabolischen Flächenabschnitt (54) der Lichtaustrittsseite (14) gebildet ist.

7. Leuchtvorrichtung nach einem der vorherigen Ansprüche,
**dadurch gekennzeichnet, dass**
der Lichtleiter (12) an seiner der Lichtaustrittsseite (14) abgewandten Rückseite (18) eine Auskoppelstruktur für das parallelisierte Licht (30, 36, 56) aufweist, die insbesondere eine Vielzahl von stufenartig angeordneten Reflexionsflächen (20) umfasst.

8. Leuchtvorrichtung nach einem der vorherigen Ansprüche,
**dadurch gekennzeichnet, dass**
an der Lichteintrittsseite (22) eine Umlenkstruktur (38) vorgesehen ist, durch die das von der Lichtquelle (10) ausgestrahlte Licht (30, 36, 56) in einer zur Querschnittsflächenebene senkrechten Ebene aufweitbar und parallelisierbar ist.

9. Leuchtvorrichtung nach Anspruch 8,
**dadurch gekennzeichnet, dass**
die Umlenkstruktur (38) drei in dem Lichtleiter (12) ausgebildete Inzisuren (40, 42), die innere Reflexionsflächen (46-50) zur Umlenkung des Lichts (30, 36) definieren, und an der Lichteintrittsseite (22) des Lichtleiters (12), insbesondere stufenartig angeordnete, äußere Reflexionsflächen (52) umfasst, durch die zuvor bereits seitlich umgelenktes Licht (36) in eine Hauptabstrahlrichtung (44) der Lichtquelle umlenkbar ist.

10. Leuchtvorrichtung nach Anspruch 9,
**dadurch gekennzeichnet, dass**
eine in der Hauptabstrahlrichtung (44) der Lichtquelle (10) angeordnete erste Inzisur (40) vordere innere Reflexionsflächen (46) aufweist, durch die im Wesentlichen entlang der Hauptabstrahlrichtung (44) der Lichtquelle (10) ausgesandtes Licht (30) seitlich umlenkbar ist, und dass eine jeweils außerhalb der Hauptabstrahlrichtung (44) der Lichtquelle (10) angeordnete zweite und dritte Inzisur (42) jeweils eine vordere und/oder eine hintere innere Reflexionsfläche (48, 50) aufweisen, wobei durch die vorderen inneren Reflexionsflächen (48) Licht (36), dessen Strahlrichtung um einen von Null verschiedenen Winkel gegenüber der Hauptabstrahlrichtung (44) der Lichtquelle (10) geneigt ist, seitlich und/oder durch die hinteren inneren Reflexionsflächen (50) zuvor bereits seitlich umgelenktes Licht (30) in die Hauptabstrahlrichtung (44) der Lichtquelle (10) umlenkbar ist.

11. Leuchtvorrichtung nach Anspruch 8,
**dadurch gekennzeichnet, dass**
die Umlenkstruktur (38) zwei Parallelisierelemente (24') und ein zwischen diesen angeordnetes Linsenelement (26') umfasst.

12. Leuchtvorrichtung nach Anspruch 11,
**dadurch gekennzeichnet, dass**
sich das Linsenelement (26') und die Parallelisierelemente (24') in einer zur Querschnittsflächenebene parallelen Richtung erstrecken, wobei die Querschnittsflächen des Linsenelements (26') bzw. der Parallelisierelemente (24') jeweils gleich bleiben.

13. Leuchtvorrichtung nach einem der vorherigen Ansprüche,
**dadurch gekennzeichnet, dass**
der Lichtleiter (12) eine im Wesentlichen keilförmige Querschnittsfläche aufweist.

14. Leuchtvorrichtung nach einem der vorherigen Ansprüche,
**dadurch gekennzeichnet, dass**
der Lichtleiter (12) derart gekrümmt ist, dass die Lichtaustrittsseite (14) in der Querschnittsflächenebene gesehen eine, insbesondere konvexe, Krümmung aufweist.

15. Leuchtvorrichtung nach einem der vorherigen Ansprüche,
**dadurch gekennzeichnet, dass**
mehrere Lichtquellen (10) in einer zur Querschnittsflächenebene senkrechten Richtung entlang der Lichteintrittsseite (22) angeordnet sind.

## Geänderte Patentansprüche

### Geänderte Patentansprüche gemäss Regel 86(2) EPÜ.

**1.** Leuchtvorrichtung mit wenigstens einer Lichtquelle (10) und einem Lichtleiter (12) für das von der Lichtquelle (10) ausgesandte Licht (30, 36, 56),
wobei der Lichtleiter (12) eine der Lichtquelle (10) zugewandte Lichteintrittsseite (22) und eine an die Lichteintrittsseite (22) angrenzende Lichtaustrittsseite (14) aufweist,
wobei der Lichtleiter (12) eine - ausgehend von der Lichteintrittsseite (22) entlang der Lichtaustrittsseite (14) gesehen - sich verjüngende Querschnittsfläche aufweist und
wobei eine Parallelisierstruktur vorgesehen ist, welche zwei Parallelisierelemente (24) und ein zwischen diesen angeordnetes Linsenelement (26) umfasst, um das von der Lichtquelle (10) ausgestrahlte und in den Lichtleiter (12) eingetretene Licht (30, 36, 56) in der Querschnittsflächenebene zu parallelisieren,
**dadurch gekennzeichnet, dass**
sich das Linsenelement (26) und die Parallelisierelemente (24) in einer zur Querschnittsflächenebene senkrechten Richtung erstrecken, wobei die Querschnittsflächen des Linsenelements (26) bzw. der Parallelisierelemente (24) jeweils gleich bleiben.

**2.** Leuchtvorrichtung nach Anspruch 1,
**dadurch gekennzeichnet, dass**
die Parallelisierstruktur an der Lichteintrittsseite (22) angeordnet ist.

**3.** Leuchtvorrichtung nach Anspruch 1 oder 2,
**dadurch gekennzeichnet, dass**
eine weitere Parallelisierstruktur an der Lichtaustrittsseite (14) angeordnet ist.

**4.** Leuchtvorrichtung mit wenigstens einer Lichtquelle (10) und einem Lichtleiter (12) für das von der Lichtquelle (10) ausgesandte Licht (30, 36, 56),
wobei der Lichtleiter (12) eine der Lichtquelle (10) zugewandte Lichteintrittsseite (22) und eine an die Lichteintrittsseite (22) angrenzende Lichtaustrittsseite (14) aufweist,
wobei der Lichtleiter (12) eine - ausgehend von der Lichteintrittsseite (22) entlang der Lichtaustrittsseite (14) gesehen - sich verjüngende Querschnittsfläche aufweist und
wobei eine Parallelisierstruktur vorgesehen ist, um das von der Lichtquelle (10) ausgestrahlte und in den Lichtleiter (12) eingetretene Licht (30, 36, 56) in der Querschnittsflächenebene zu parallelisieren,
**dadurch gekennzeichnet, dass**
die Parallelisierstruktur an der Lichtaustrittsseite (14) angeordnet ist.

**5.** Leuchtvorrichtung nach Anspruch 3 oder 4,
**dadurch gekennzeichnet, dass**
die Parallelisierstruktur an der Lichtaustrittsseite durch einen, insbesondere an die Lichteintrittsseite (22) angrenzenden, parabolischen Flächenabschnitt (54) der Lichtaustrittsseite (14) gebildet ist.

**6.** Leuchtvorrichtung nach einem der vorherigen Ansprüche,
**dadurch gekennzeichnet, dass**
der Lichtleiter (12) an seiner der Lichtaustrittsseite (14) abgewandten Rückseite (18) eine Auskoppelstruktur für das parallelisierte Licht (30, 36, 56) aufweist, die insbesondere eine Vielzahl von stufenartig angeordneten Reflexionsflächen (20) umfasst.

**7.** Leuchtvorrichtung nach einem der vorherigen Ansprüche,
**dadurch gekennzeichnet, dass**
an der Lichteintrittsseite (22) eine Umlenkstruktur (38) vorgesehen ist, durch die das von der Lichtquelle (10) ausgestrahlte Licht (30, 36, 56) in einer zur Querschnittsflächenebene senkrechten Ebene aufweitbar und parallelisierbar ist.

**8.** Leuchtvorrichtung nach Anspruch 7,
**dadurch gekennzeichnet, dass**
die Umlenkstruktur (38) drei in dem Lichtleiter (12) ausgebildete Inzisuren (40, 42), die innere Reflexionsflächen (46-50) zur Umlenkung des Lichts (30, 36) definieren, und an der Lichteintrittsseite (22) des Lichtleiters (12), insbesondere stufenartig angeordnete, äußere Reflexionsflächen (52) umfasst, durch die zuvor bereits seitlich umgelenktes Licht (36) in eine Hauptabstrahlrichtung (44) der Lichtquelle umlenkbar ist.

**9.** Leuchtvorrichtung nach Anspruch 8,
**dadurch gekennzeichnet, dass**
eine in der Hauptabstrahlrichtung (44) der Lichtquelle (10) angeordnete erste Inzisur (40) vordere innere Reflexionsflächen (46) aufweist, durch die im Wesentlichen entlang der Hauptabstrahlrichtung (44) der Lichtquelle (10) ausgesandtes Licht (30) seitlich umlenkbar ist, und dass eine jeweils außerhalb der Hauptabstrahlrichtung (44) der Lichtquelle (10) angeordnete zweite und dritte Inzisur (42) jeweils eine vordere und/oder eine hintere innere Reflexionsfläche (48, 50) aufweisen, wobei durch die vorderen inneren Reflexionsflächen (48) Licht (36), dessen Strahlrichtung um einen von Null verschiedenen Winkel gegenüber der Hauptabstrahlrichtung (44) der Lichtquelle (10) geneigt ist, seitlich und/oder durch die hinteren inneren Reflexionsflächen (50) zuvor bereits seitlich umgelenktes Licht (30) in die Hauptabstrahlrichtung (44) der Lichtquelle (10) umlenkbar ist.

**10.** Leuchtvorrichtung nach Anspruch 7,
**dadurch gekennzeichnet, dass**
die Umlenkstruktur (38) zwei Parallelisierelemente (24') und ein zwischen diesen angeordnetes Linsenelement (26') umfasst.

**11.** Leuchtvorrichtung nach Anspruch 10,
**dadurch gekennzeichnet, dass**
sich das Linsenelement (26') und die Parallelisierelemente (24') in einer zur Querschnittsflächenebene parallelen Richtung erstrecken, wobei die Querschnittsflächen des Linsenelements (26') bzw. der Parallelisierelemente (24') jeweils gleich bleiben.

**12.** Leuchtvorrichtung nach einem der vorherigen Ansprüche,
**dadurch gekennzeichnet, dass**
der Lichtleiter (12) eine im Wesentlichen keilförmige Querschnittsfläche aufweist.

**13.** Leuchtvorrichtung nach einem der vorherigen Ansprüche,
**dadurch gekennzeichnet, dass**
der Lichtleiter (12) derart gekrümmt ist, dass die Lichtaustrittsseite (14) in der Querschnittsflächenebene gesehen eine, insbesondere konvexe, Krümmung aufweist.

**14.** Leuchtvorrichtung nach einem der vorherigen Ansprüche,
**dadurch gekennzeichnet, dass**
mehrere Lichtquellen (10) in einer zur Querschnittsflächenebene senkrechten Richtung entlang der Lichteintrittsseite (22) angeordnet sind.
